# EUROPEAN PATENT SPECIFICATION

(11) **EP 2 282 067 B1**
(45) Date of publication and mention of the grant of the patent: **07.03.2012**
(21) Application number: 09167360.8
(22) Date of filing: 06.08.2009
(51) Int. Cl.: F16B 12/20, E05D 5/08

(54) **Connecting fitting**
Verbindungbeschlag
Ferrure d'assembalge

(43) Date of publication of application: 09.02.2011
(73) Proprietor: King Slide Works Co., Ltd., Kaohsiung, Hsien (TW)
(72) Inventor: Liang, Hsiu-Chiang, Kaohsiung Hsien (TW); Chen, Ken-Ching, Kaohsiung Hsien (TW); Wang, Chun-Chiang, Kaohsiung Hsien (TW)
(74) Representative: Viering, Jentschura & Partner

(56) References cited:
- EP-A1- 0 698 357
- EP-A2- 0 878 630
- GB-A- 2 411 431
- US-A1- 2005 042 027

## Description

### BACKGROUND OF THE INVENTION

### Field of the invention

This invention relates to a connecting fitting, and more particularly to a connecting fitting for furniture installation, which is able to be used repeatedly.

### Description of the Prior Art

Connecting fittings can be used for furniture connection. Such techniques have been disclosed, such as U.S. Patent No. 5,611,637, titled "Furniture Fitting", which comprises at least one dowel 6 to be inserted into a hole 22 in one furniture part, an expansion member 10 disposed in the dowel 6, and a holding member 8 connected to another furniture part. The expansion member 10 has an expansion surface and is movable relative to the dowel 6 between a relaxed position, enabling the dowel 6 to be inserted into the hole 22, and an expanded position. The holding member 8 is connected to an end of the expansion member 10 with a shaft for pivotal movement about the shaft. The holding member 8 has a cam surface 9 which is adapted to abut against a surface of the dowel 6, such that pivotal movement of the holding member 8 causes the cam surface 9 to abut against the surface of the dowel 6, and the holding member 8 drives the expansion member 10 to move axially. With the expansion surface to expand the dowel 6, the dowel 6 is able to be secured in the hole 22.

The dowel 6 is substantially formed with plural teeth around its surface. The inner surface of the hole 22 of the furniture part can be bit by the dowel 6 when the dowel 6 is inserted into the hole 22 and the holding member 8 is turned for the expansion member 10 to expand the dowel 6. However, once the holding member 8 is released, the expansion member 10 will return to its original position, so that the dowel 6 will be released and the teeth will be disengaged from the inner surface of the hole 22. When the teeth engage with or disengage from the inner surface of the hole 22, it will leave marks at the same positions each time. After many times of usage, the marks will influence the retaining effect of the conventional connecting fitting.

### SUMMARY OF THE INVENTION

This invention relates to a connecting fitting for quick assembly of furniture, which can be used repeatedly.

According to one aspect of the present invention, there is provided a connecting fitting, comprising:
a body having a cam surface thereon;
an inserting assembly pivotally connected to the body, the inserting assembly comprising an inserting member, a pair of expandable members, and a plug;
the inserting member comprising a head portion and a body portion extending from the head portion, the body portion being pivotally connected to the body;
the pair of expandable members mounted between the body and the head portion of the inserting member, the expandable member comprising a mounting hole, an expandable portion extending from the mounting hole outwardly and a lip portion axially extending from one end of the expandable portion, the expandable portion and the lip portion defining a compressible space therein, and the expandable portion comprising a plurality of notches and snap portions; and
the plug fitted on the body portion of the inserting member and located between the expandable members and the body, the expandable portion being urged by a push force from the cam surface of the body and the plug to hold against the head portion of the inserting member and to expand the snap portions outwardly.

Preferably, the body comprises a pair of lugs spaced from each other, a slot formed between the pair of lugs, and a connecting hole penetrating through the pair of lugs, the pair of lugs each having a first surface and a second surface, and the cam surface of the body being connected between the first and second surfaces.

Preferably, the body comprises a connecting portion for connecting with an object.

Preferably, the body comprises a handle for operating the body.

Preferably, the connecting fitting comprises a further inserting assembly and the body comprises a connecting portion, a pair of lugs spaced from each other, a base disposed between the pair of lugs, and a pair of slots each formed between the base and one of the pair of lugs, and the inserting assembly being pivotally connected to each of the pair of slots.

### BRIEF DESCRIPTION OF THE DRAWINGS

Fig. 1 is an exploded view of a connecting fitting according to a first preferred embodiment of the present invention;
Fig. 2 is an assembled cross-sectional view of the connecting fitting according to the first preferred embodiment of the present invention;
Fig. 3 is a cross-sectional view showing the connecting fitting inserted into an object according to the first preferred embodiment of the present invention;
Fig. 4 is a cross-sectional view showing the connecting fitting securely connected to the object according to the first preferred embodiment of the present invention;
Fig. 6 is an exploded view of a connecting fitting according to a second preferred embodiment of the present invention;
Fig. 7 is an assembled cross-sectional view of the connecting fitting according to the second preferred embodiment of the present invention;
Fig. 8 is an exploded view of a connecting fitting according to a third preferred embodiment of the present invention;
Fig. 9 is a perspective view of the present invention showing the connecting fitting to be connected with a tubal object;
Fig. 10 is a perspective view of a connecting fitting according to a fourth preferred embodiment of the present invention;
Fig. 11 is a perspective view of the present invention showing the connecting fitting applied to a drawer assembly; and
Fig. 12 is an exploded view of the present invention showing the connecting fitting applied to a door panel and a hinge.

### DETAILED DESCRIPTION OF THE PREFERRED EMBODIMENTS

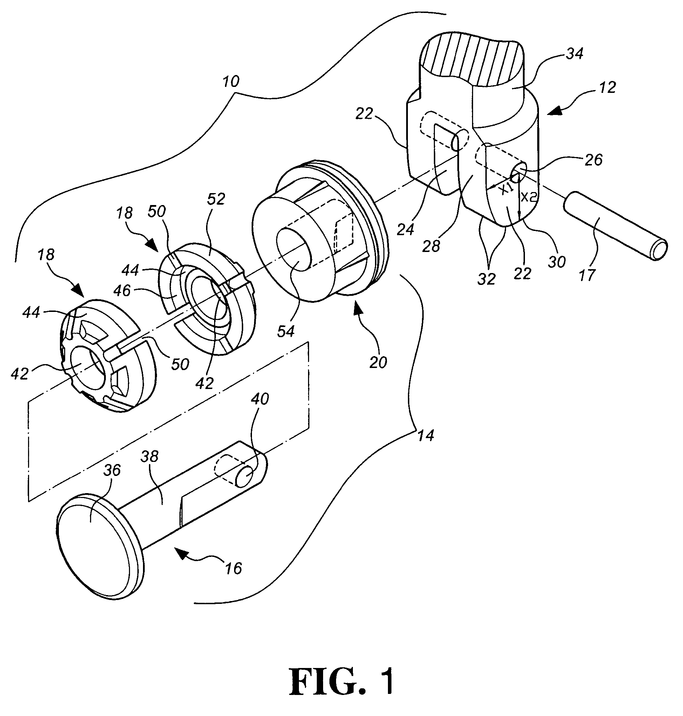

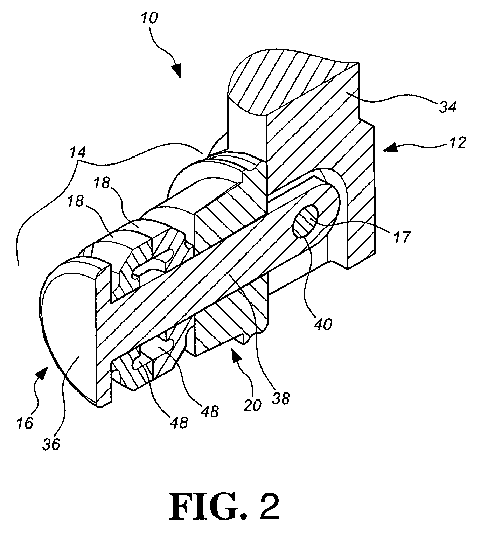

Figs. 1 and 2 show a connecting fitting 10 of a first preferred embodiment of the present invention comprises a body 12 and an inserting assembly 14 connected with the body 12. The inserting assembly 14 comprises an inserting member 16 which is pivotally connected to the body 12 with a connecting member 17, a pair of expandable members 18, and a plug 20 mounted between the body 12 and the inserting member 16.

The body 12 comprises a pair of lugs 22 spaced from each other, a slot 24 formed between the pair of lugs 22, and a connecting hole 26 penetrating through the pair of lugs 22. Each of the lugs 22 has a first surface 28 and a second surface 30 extending from the first surface 28. The second surface 30 is substantially perpendicular to the first surface 28. The distance from the center of the connecting hole 26 to the first surface 28, defined as X1, is different from the distance from the center of the connecting hole 26 to the second surface 30, defined as X2. Preferably, the body 12 further has a cam surface 32 connected between the first and the second surfaces 28, 30. The body 12 further comprises a connecting portion 34 for a user to operate the body 12 or to connect with an object.

The inserting member 16 comprises a head portion 36 and a body portion 38 extending from the head portion 36. The body portion 38 is formed with a through hole 40. By inserting the connecting member 17 through the through hole 40 and the connecting hole 26, the inserting member 16 is pivotally connected with the body 12.

Each expandable member 18 comprises a mounting hole 42 for insertion of the body portion 38 of the inserting member 16, an expandable portion 44 extending from the mounting hole 42 outwardly, and a lip portion 46 axially extending from one end of the expandable portion 44. The expandable portion 44 and the lip portion 46 define a compressible space 48 therein. The expandable portion 44 comprises a plurality of notches 50 and snap portions 52. In this embodiment, the pair of expandable members 18 is made of flexible material.

The plug 20 is formed with a through hole 54 for insertion of the body portion 38 of the inserting member 16, and is located between the body 12 and the pair of expandable members 18.

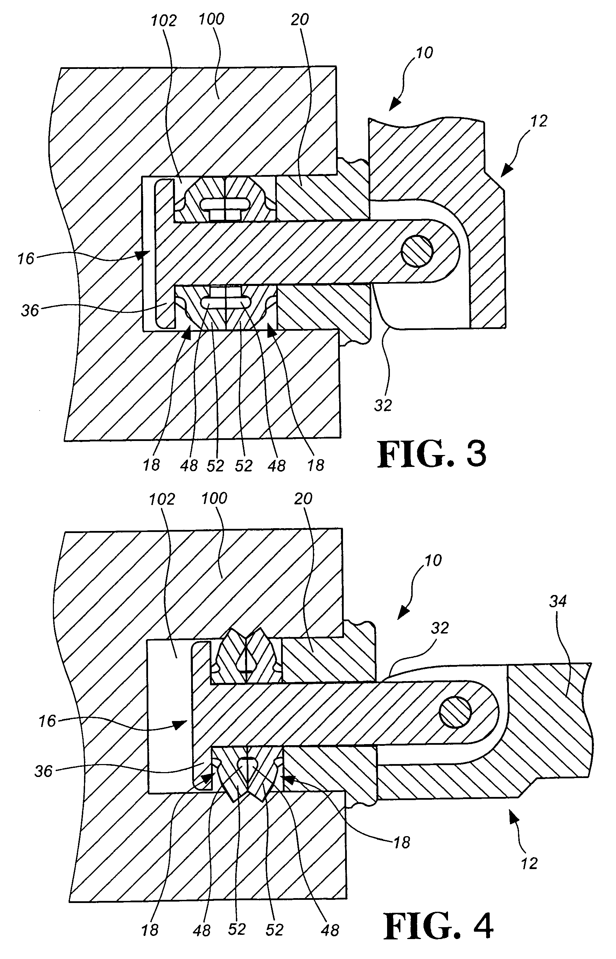

Fig. 3 shows a cross-sectional view of a connection between the connecting fitting 10 and an object 100 according to the first preferred embodiment of the present invention. The object 100 has an installation hole 102. The inserting member 16 is pivotally connected to the body 12. The pair of expandable members 18 and the plug 20 are mounted between the body 12 and the inserting member 16. All the inserting member 16, the pair of expandable members 18 and the plug 20 are inserted in the installation hole 102 of the object 100. The cam surface 32 of the body 12 is adjacent to the plug 20.

Fig. 4 is a cross-sectional view of the connecting fitting 10 and the object 100 in an operated status according to the first preferred embodiment of the present invention. When the connecting portion 34 of the body 12 is turned to an angle by a user, the cam surface 32 of the body 12 will lean against the plug 20 to pull the inserting member 16, and then the head portion 36 of the inserting member 16 will squeeze the pair of expandable members 18 towards the plug 20. Thus, the snap portions 52 of the pair of expandable members 18 will be expanded outwardly to mesh with the inner wall of the installation hole 102 of the object 100.

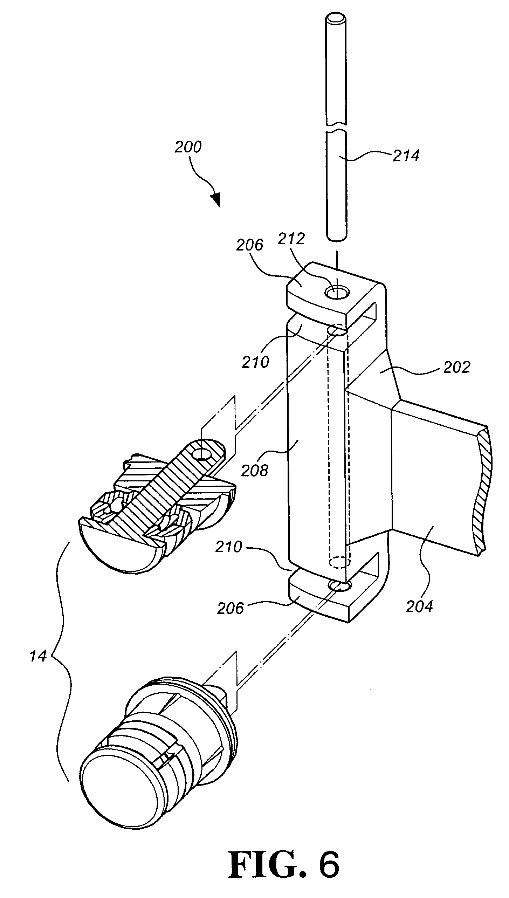

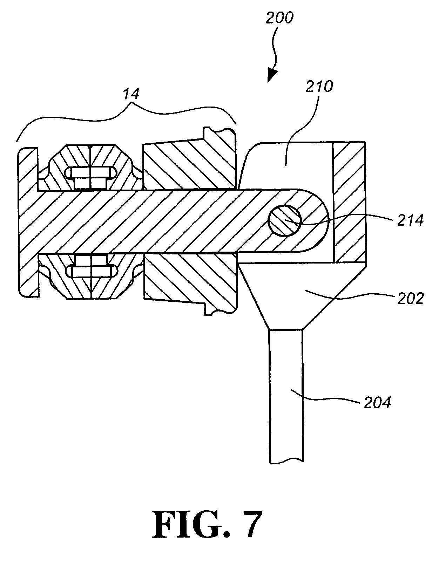

Referring to Figs. 6 and 7, a connecting fitting 200 according to a second preferred embodiment of the present invention comprises a body 202 and a pair of inserting assemblies 14. The body 202 comprises a connecting portion 204, a pair of lugs 206 spaced from each other, a base 208 disposed between the pair of lugs 206 and integrally formed with the body 202, a pair of slots 210 each formed between the base 208 and one of the pair of lugs 206, and a connecting hole 212. The connection hole 212 penetrates through the pair of lugs 206 and the base 208. The pair of inserting assemblies 14 are pivotally connected to the pair of slots 210 of the body 202 with a connecting member 214. Thus, the connecting fitting 200 could have the plurality of inserting assemblies 14.

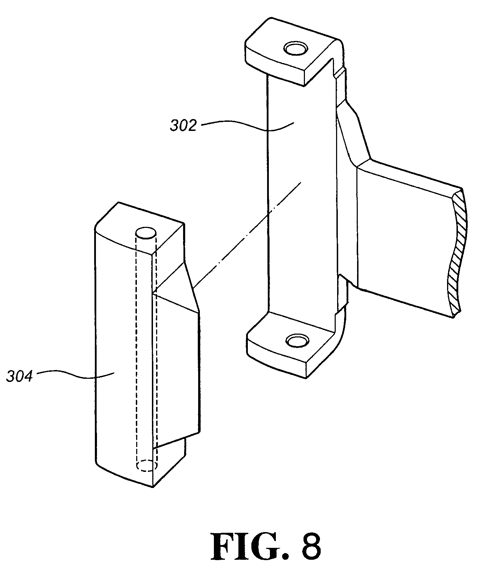

Fig. 8 shows a third preferred embodiment of the present invention, which is substantially similar to the second preferred embodiment with the exceptions described hereinafter. The body is divided into two separate portions, a main body 302 and a middle base 304 which is separated from the body 302.

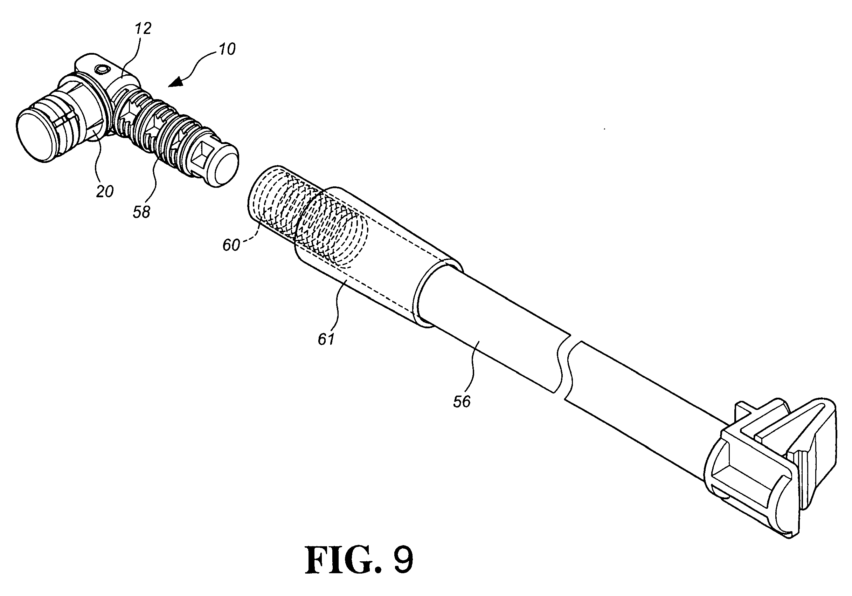

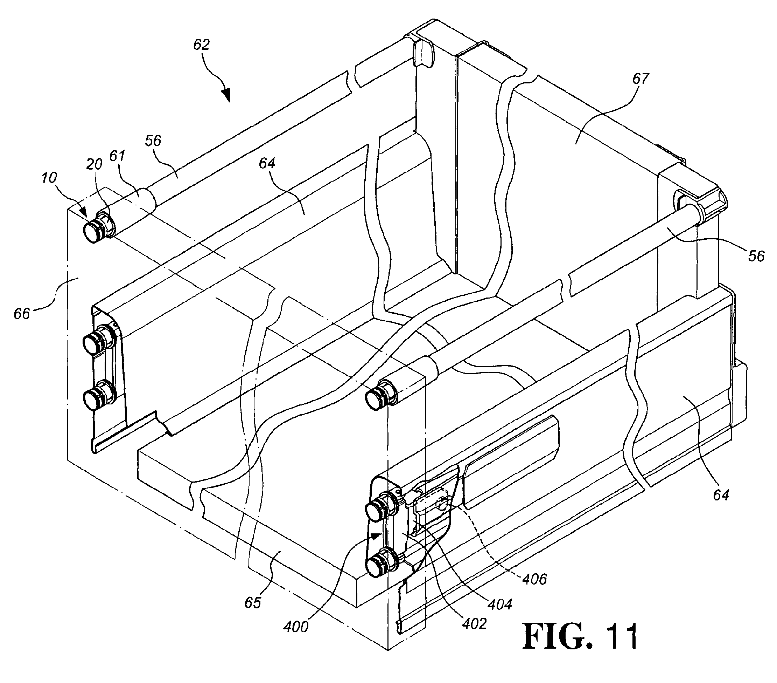

Fig. 9 is a schematic view of the connecting fitting 10 of the present invention in conjunction with a tubal object 56. The body 12 of the connecting fitting 10 has a spiral connecting portion 58. The tubal object 56 has a coupling portion 60. The coupling portion 60 is formed with a threaded hole therein for connecting with the spiral connecting portion 58 of the body 12. Furthermore, a sleeve 61 is provided at the junction of the tubal object 56 and the body 12. When the body 12 is turned to an angle with respect to the tubal object 56, the sleeve 61 will be fitted on the plug 20, as shown in Fig 11.

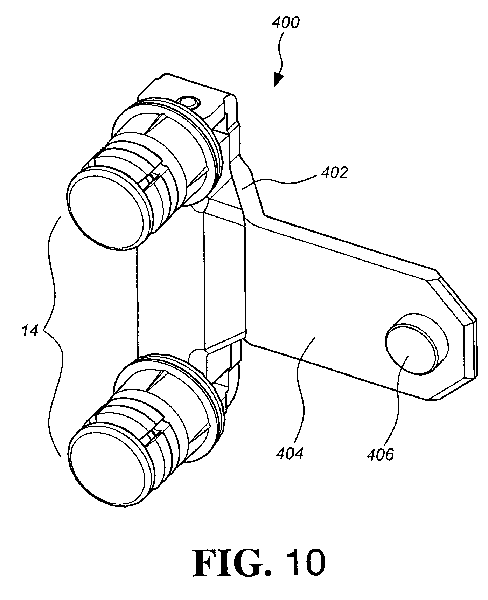

As shown in Fig. 10, a connecting fitting 400 according to a fourth preferred embodiment of the present invention comprises a body 402 and a pair of inserting assemblies 14 which are pivotally connected to two opposite ends of the body 402. The body 402 has a connecting portion 404 and a stud 406 on the connecting portion 404.

Fig. 11 is a schematic view showing the connecting fitting of the present invention adapted to connect with two objects. For instance, it can be adapted to connect with two objects of a drawer assembly 62. The drawer assembly 62 comprises a pair of side frames 64, a bottom board 65, a front panel 66 and a rear board 67 to form a complete drawer space. A pair of tubal objects 56 is provided at an upper end of the drawer assembly 62. The pair of side frames 64 and the front panel 66 are referred to as a first object and a second object, respectively, and can be connected by the connecting fitting 400. The pair of inserting assemblies 14 of the connecting fitting 400 is connected to the front panel 66. By turning the connecting portion 404 of the body 402 to an angle, the body 402 is turned to an angle with respect to the connecting portion 404 for the stud 406 to engage with the side frame 64. With the connecting fitting 400, the side frames 64 and the front panel 66 can be secured firmly. Furthermore, the tubal objects 56 and the front panel 66 can also be referred to as the first object and the second object, respectively, as shown in Fig. 9. By connecting the coupling portion 60 of the tubal object 56 with the spiral connecting portion 58, the inserting assembly 14 is inserted into an installation hole of the front panel 66 by turning the tubal object 56 to an angle. The snap portions 52 of the expandable member 18 will be expanded to mesh with the inner wall of the installation hole of the front panel 66 for securing the tubal object 56 to the front panel 66.

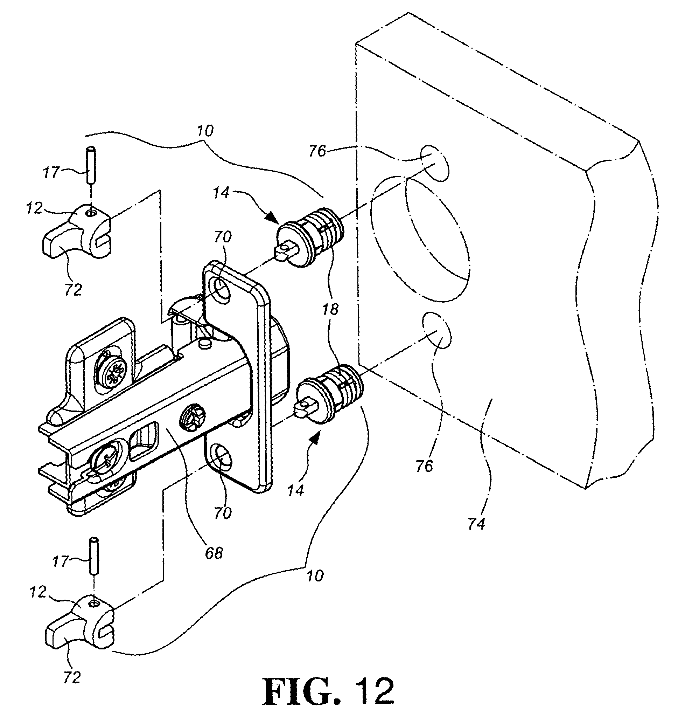

Referring to Fig. 12, the connecting fitting is used to secure two objects, such as a hinge 68 and a door panel 74 which can be referred to as the first object and the second object, respectively. The hinge 68 comprises a pair of through holes 70 and a pair of inserting assemblies 14 which are inserted through the through holes 70 of the hinge 68 and pivotally connected to the body 12 with connecting members 17. The connecting portion of the body 12 comprises a handle 72. The door panel 74 has a pair of holes 76 for the corresponding inserting assemblies 14 to be inserted therein. When in use, the handle 72 of the body 12 is pulled to force the expandable members 18 of the inserting assemblies 14 to mesh with the holes 76 of the door panel 74.

In other words, when the inserting assembly is inserted into the hole of an object, by turning the body to an angle, the expandable member will be squeezed and the snap portions will be expanded to mesh with the inner wall of the hole of the object, thus, the expandable member is firmly secured to the object. To disengage the inserting assembly from the hole of the object, simply turn the handle back to its original position, the expandable member will no longer be expanded to mesh with the inner wall of the hole of the object. Accordingly, the connecting fitting of the present invention may be removed easily from the object.

Furthermore, the expandable member of the connecting fitting of the present invention is mounted between the inserting assembly and the body in a movable manner. Therefore, the expandable member can be disengaged and reused for many times. Whenever being used, the angle of the snap portions of the expandable member changes a bit to mesh with the inner wall, so that the mesh will be always secured. If necessary, the number of the expandable member can be increased.

Although this invention has been disclosed in the foresaid preferred embodiments, it is not the limitation of this invention. The scope of this invention is based on what we have claimed.

## Claims

1. A connecting fitting (10), comprising:
a body (12) having a cam surface (32) thereon;
an inserting assembly (14) comprising an inserting member (16), a pair of expandable members (18) and a plug (20);
said inserting member (16) comprising a head portion (36) and a body portion (38) extending from said head portion (36), said body portion (38) being pivotally connected to said body (12);
the pair of expandable members (18) being mouted on the body portion (38) between said body (12) and said head portion (36) of said inserting member (16), each expandable member (18) comprising a mounting hole (42) for mounting on the body portion (38), an expandable portion (44) extending from the mounting hole (42) outwardly, and a lip portion (46) axially extending from one end of said expandable portion (44), said expandable portion (44) and said lip portion (46) defining a compressible space (48) therein, and said expandable portion (44) comprising a plurality of notches (50) and snap portions (52); and
said plug (20) fitted on said body portion (38) of said inserting member (16) and located between said expandable members (18) and said body (12).

2. The connecting fitting according to claim 1, wherein said body (12) comprises a pair of lugs (22) spaced from each other, a slot (24) formed between said pair of lugs (22), and a connecting hole (26) penetrating through said pair of lugs (22), said pair of lugs (22) each having a first surface (28) and a second surface (30), and said cam surface (32) of said body (12) being connected between said first and second surfaces (28),(30).

3. The connecting fitting according to claim 2, wherein a first distance (X1) is defined from the center of said connecting hole (26) to said first surface (28), a second distance (X2) is defined from the center of said connecting hole (26) to said second surface (30), and said first distance (X1) and said second distance (X2) are different.

4. The connecting fitting according to claim 1, wherein said body (12) comprises a connecting portion (34).

5. The connecting fitting according to claim 1, wherein said body (12) comprises a handle (72).

6. The connecting fitting according to claim 1, wherein the connecting fitting comprises a further inserting assembly (14) and wherein said body (12) comprises a connecting portion (204), a pair of lugs (206) spaced from each other, a base (208) disposed between said pair of lugs (206), and a pair of slots (210) each formed between said base (208) and one of said pair of lugs (206), and each of said inserting assemblies (14) being pivotally connected to one of the pair of slots (210).

## Patentansprüche

1. Ein Einpaßmechanismus (10), aufweisend:
einem Körper (12), der oben mit einer Nockenfläche (32) geformt ist;
einem Einrastelement (14) aus einem Einrastteil (16), einem Paar von erweiterbaren Elementen (18) und einem Stöpsel (20);
wobei dieses Einrastteil (16) aus einem Kopfteil (36) und aus einem Stift (38), der sich vom Kopftteil (36) erstreckt, gebildet ist, während der Stift (38) drehbar am Körper (12) befestigt ist;
das Paar der erweiterbaren Elemente (18) zwischen dem Körper (12) und dem Kopfteil (36) des Einrastteils (16) auf dem Stift (38) montiert ist, wobei jedes erweiterbare Element (18) für die Montage auf dem Stift (38) ein Montageloch (42) aufweist; ein erweiterbares Element (44) vom Montageloch (42) nach außen bewegt wird und sich ein Flansch (46) axial von einem Ende des erweiterbaren Elements (44) erstreckt; das erweiterbare Element (44) und der Flansch (46) inwendig einen verkleinerbaren Raum (48) bilden und das erweiterbare Element (44) mit mehreren Kerben (50) und mit einem Schnappteil (52) versehen ist; und
der Stöpsel (20) auf dem Stift (38) des Einrastteils (16) gepaßt wird und sich zwischen den erweiterbaren Elementen (18) und dem Körper (12) befindet.

2. Der Einpaßmechanismus nach Anspruch 1, **dadurch gekennzeichnet, dass** der Körper (12) mit einem Paar von Ösen (22), die in einem Abstand zueinander gebildet sind, versehen ist; zwischen diesem Paar von Ösen (22) eine Lücke (24) gebildet und durch dieses Paar von Ösen (22) ein Verbindungsloch (26) geformt ist; das Paar von Ösen (22) je eine erste Fläche (28) und eine zweite Fläche (30) aufweist, wobei die Nockenfläche (32) des Körpers (12) mit der ersten und der zweiten Fläche (28), (30) verbunden ist.

3. Der Einpaßmechanismus nach Anspruch 2, **dadurch gekennzeichnet, dass** von der Mitte des Verbindungsloches (26) zur ersten Fläche (28) ein erster Abstand (X1) und zwischen der Mitte des Verbindungsloches (26) zur zweiten Fläche (30) ein zweiter Abstand (X2) gebildet sind, wobei der erste Abstand (X1) vom zweiten Abstand (X2) unterschiedlich ist.

4. Der Einpaßmechanismus nach Anspruch 1, **dadurch gekennzeichnet, dass** der Körper (12) mit einem Anschlußteil (34) geformt ist.

5. Der Einpaßmechanismus nach Anspruch 1, **dadurch gekennzeichnet, dass** der Körper (12) mit einem Griff (72) versehen ist.

6. Der Einpaßmechanismus nach Anspruch 1, **dadurch gekennzeichnet, dass** der Einpaßmechanismus weiter aus einem weiteren Einrastelement (14) aufgebaut ist, wobei der Körper (12) mit einem Anschlußteil (204), einem Paar von Ösen (206), die in einem Abstand zueinander gebildet sind, einer Basis (208) zwischen dem Paar von Ösen (206) und mit einem Paar von Lücken (210), die je zwischen der Basis (208) und einem der Paare von Ösen (206) gebildet sind, aufgebaut ist, wobei die Einrastelemente (14) drehbar an je einem der Paare von Lücken (210) befestigt sind.

## Revendications

1. Un assemblage de raccordement (10), comprenant:
un corps (12) ayant une surface de came (32) s'y rapportant;
un assemblage d'insertion (14) comprenant un élément d'insertion (16), une paire d'éléments expansibles (18) et un élément enfichable (20);
ledit élément d'insertion (16) comprenant une partie de tête (36) et une partie de corps (38) s'étendant à partir de la partie de tête (36), ladite partie de corps (38) raccordée de façon pivotante au dit corps (12);
la paire d'éléments expansibles (18) étant montée sur la partie de corps (38) entre ledit corps (12) et ladite partie de tête (36) dudit élément d'insertion (16), chaque élément expansible (18) comprenant un trou de montage (42) pour montage sur la partie de corps (38), une partie expansible (44) s'étendant à partir du trou de montage (42) vers l'extérieur, et une partie labiale (46) s'étendant axialement à partir d'une extrémité de ladite partie expansible (44), ladite partie expansible (44) et ladite partie labiale (46) y définissant un espace compressible (48), et ladite partie expansible (44) comprenant une pluralité de parties d'encoches (50) et d'encliquetages (52); et
ledit élément enfichable (20) assemblé sur ladite partie du corps (38) dudit élément d'insertion (16) et situé entre lesdits éléments expansibles (18) et ledit corps (12).

2. L'assemblage de raccordement selon la revendication 1, où ledit corps (12) comprend une paire d'oreilles (22) espacées l'une de l'autre, un espace (24) formé entre ladite paire d'oreilles (22), et un trou de raccordement (26) pénétrant au travers de ladite paire d'oreilles (22), ladite paire d'oreilles (22) ayant chacune une première surface (28) et une seconde surface (30), et ladite surface de came (32) dudit corps (12) étant connectée entre lesdites première et seconde surfaces (28), (30).

3. L'assemblage de raccordement selon la revendication 2, où une première distance (X1) est définie à partir du centre dudit trou de raccordement (26) vers ladite première surface (28), une seconde distance (X2) est définie à partir du centre dudit trou de raccordement (26 vers ladite seconde surface (30), et ladite première surface (X1) et ladite seconde distance (X2) sont différentes.

4. L'assemblage de raccordement selon la revendication 1, où ledit corps (12) comprend une partie de raccordement (34).

5. L'assemblage de raccordement selon la revendication 1, où ledit corps (12) comprend une poignée (72).

6. L'assemblage de raccordement selon la revendication 1, où l'assemblage de raccordement comprend un assemblage d'insertion supplémentaire (14) et où ledit corps (12) comprend une partie de raccordement (204), une paire d'oreilles (206) espacées l'une de l'autre, une base (208) disposée entre ladite paire d'oreilles (206), et une paire d'espaces libre (210) chacun formé entre ladite base (208) et une desdites paires d'oreilles (206), et chacun desdits assemblages d'insertion (14) étant raccordé de façon pivotante à l'une des paires d'espaces libres (210).
